(19) **Europäisches Patentamt / European Patent Office / Office européen des brevets**

(11) **EP 2 107 795 A2**

(12) # EUROPEAN PATENT APPLICATION

(43) Date of publication:
 **07.10.2009 Bulletin 2009/41**

(51) Int Cl.:
 **H04N 1/62** *(2006.01)*     **G06T 11/00** *(2006.01)*

(21) Application number: **09154323.1**

(22) Date of filing: **04.03.2009**

(84) Designated Contracting States:
 **AT BE BG CH CY CZ DE DK EE ES FI FR GB GR HR HU IE IS IT LI LT LU LV MC MK MT NL NO PL PT RO SE SI SK TR**
 Designated Extension States:
 **AL BA RS**

(30) Priority: **31.03.2008 JP 2008089462**

(71) Applicant: **Brother Kogyo Kabushiki Kaisha Nagoya-shi, Aichi-ken 467-8561 (JP)**

(72) Inventor: **Watanabe, Takeshi Aichi 467-8562 (JP)**

(74) Representative: **Prüfer & Partner GbR European Patent Attorneys Sohnckestraße 12 81479 München (DE)**

(54) **Print data generating device, method to generate print data, and computer usable medium therefor**

(57)    A print data generating apparatus to generate print data based on originally inputted image data is provided. The print data generating apparatus includes a transparentized color designating unit to designate a transparentized color, a color difference calculating unit to calculate a color difference between color scale values of a marked pixel and color scale values of the designated transparentized color, a data convertor unit to convert the image data into a colorant-enabled data, and an opacity-adjusted data generating unit to generate opacity-adjusted data, in which color scale values of the pixels in the colorant-enabled data are adjusted according to the color difference, when the color difference of the marked pixel is calculated to be smaller, the opacity-adjusted data generating unit adjusts the color scale values of the marked pixel to be closer to zero so that the color scale values of the marked pixel is adjusted to have lower opacity

FIG. 9

**Description**

Cross Reference to Related Application

This application claims priority from Japanese Patent Application No. 2008-089462, filed on March 31, 2008.

Background

Technical Field

Aspects of the present invention relate to a print data generating device, a method to generate print data, and a computer usable medium therefor, and more specifically, to a device, a method, and a computer usable medium to generate print data by which naturally-gradated colors can be reproduced.

Related Art

Conventionally, an inkjet printing apparatus, which ejects a plurality of colors of inks and white ink onto a recording medium, has been known. In the inkjet printing apparatus, the inks are drawn from ink reservoirs to a plurality of ejecting channels provided in an inkjet head and ejected from nozzles at the end of the ejecting channels when actuators such as heater elements and piezoelectric elements are selectively activated. When an image is formed in colors, each of pixels composing the image is resolved, for example, into the three primary colors, which are cyan (C), magenta (M), and yellow (Y), thereafter, a colored pixel is formed as the inks adjusted in their densities are ejected onto the recording medium. In addition, a pixel in a black color is reproduced by using black (K) ink.

Further, in order to obtain images in higher quality in color reproductivity, white (W) ink can be used to reproduce white pixels and to form a base layer on a colored recording medium so that colored pixels can be reproduced clearly over the base layer regardless of the color of the recording medium. Additionally, the white ink can be blended with the other colored inks to reproduce lighter colors. Thus, images reproduced in higher quality can be obtained. Such image forming apparatuses are disclosed, for example, in Japanese Patent Provisional Publication Nos. HEI07-114241, 2002-38063, and 2007-282205, which will be hereinafter referred to as '241 publication, '063 publication, and '205 publication respectively. Further, when the white ink is used, a transparent color, which is reproduced by ejecting no ink onto corresponding areas, requires to be defined so that a specific color in the image can be reproduced by the transparent color. Such image forming apparatuses are disclosed, for example, in Japanese Patent Provisional Publications Nos. 2003-231300 and 2000-163238, which will be hereinafter referred to as '300 publication and '238 publication respectively.

Summary

According to the image forming apparatuses disclosed in '241 and '063 publications, an entire surface of the recording medium or an entire area including the image to be formed is painted uniformly in the white ink. Therefore, no specific color can be defined to be the transparent color on the recording medium or in the image. Additionally, according to the image forming apparatuses, amounts of the white ink on the entire surface and the area including the image are constant; therefore, color gradations with the white ink are not reproducible.

According to the image forming apparatuses disclosed in '300 and '238 publications, a specific color and specific areas can be defined to be transparent; however, color gradation transiting from a base color being the transparent color to another color cannot be reproduced.

According to '205 publication, color gradation transiting from a base color being the transparent color to another color can be achieved by using a predetermined color conversion table. However, when color gradation is reproduced by the printing apparatus, preparation of the color conversion table for each base color, which can be time-consuming.

In view of the above drawbacks, the present invention is advantageous in that a print data generating apparatus, a method to generate print data, and a computer usable medium therefor, by which natural gradation of colors between transparence and opaque colors in an image can be reproduced, are provided.

According to an aspect of the invention, a print data generating apparatus to generate print data, which is to be used in a printing apparatus to form an image in a plurality of colors of colorants, based on originally inputted image data representing the image, is provided. The print data generating apparatus includes a transparentized color designating unit to designate a transparentized color, which is a color of pixels in the image data to be converted into transparence, a color difference calculating unit to calculate a color difference between color scale values of a currently marked pixel among the pixels in the image data and color scale values of the designated transparentized color, a data convertor unit to convert the image data into a colorant-enabled data, which represents the image in scale values of the plurality of colors of colorants, and an opacity-adjusted data generating unit to generate opacity-adjusted data, in which color scale values of the pixels in the colorant-enabled data are adjusted according to the color difference calculated by the color difference calculating unit. When the color difference of the marked pixel is calculated to be smaller, the opacity-adjusted data generating unit adjusts the color scale values of the marked pixel to be closer to zero in the opacity-adjusted data so that the color scale values of the marked pixel is adjusted to have lower opacity.

According to another aspect of the invention, a method to generate print data to be used in a printing apparatus to form an image, based on originally inputted image data representing the image, is provided. The method includes steps of designating a transparentized color, which is a color of pixels in the image data to be converted into transparence, calculating a color difference between color scale values of a currently marked pixel among the pixels in the image data and color scale values of the designated transparentized color, converting the image data into a colorant-enabled data, which represents the image in scale values of the plurality of colors of colorants, and generating opacity-adjusted data, in which color scale values of the pixels in the colorant-enabled data are adjusted according to the color difference calculated in the step of calculating. When the color difference of the marked pixel is calculated to be smaller, the color scale values of the marked pixel is adjusted to be closer to zero in the opacity-adjusted data so that the color scale values of the marked pixel is adjusted to have lower opacity.

According to still another aspect of the invention, a computer usable medium to comprise computer readable instructions to control a computer to generate print data, which is to be used in a printing apparatus to form an image, based on originally inputted image data representing the image, is provided. The computer is controlled by the computer readable instructions to execute steps of designating a transparentized color, which is a color of pixels in the image data to be converted into transparence, calculating a color difference between color scale values of a currently marked pixel among the pixels in the image data and color scale values of the designated transparentized color, converting the image data into a colorant-enabled data, which represents the image in scale values of the plurality of colors of colorants, and generating opacity-adjusted data, in which color scale values of the pixels in the colorant-enabled data are adjusted according to the color difference calculated in the step of calculating. When the color difference of the marked pixel is calculated to be smaller, the color scale values of the marked pixel is adjusted to be closer to zero in the opacity-adjusted data so that the color scale values of the marked pixel is adjusted to have lower opacity.

According to the above configurations, print data, by which natural gradation of colors, transiting from transparent to opaque colors, is reproduced, can be generated. According to the print data, when a color of a pixel is closer to the designated transparentized color, an amount of the ink to be ejected to form the pixel is reduced.

Brief Description of the Accompanying Drawings

Fig. 1 is a plane view of an inkjet printer according to a first embodiment of the present invention.

Fig. 2 is a block diagram to illustrate an electrical configuration of the inkjet printer according to the first embodiment of the present invention.

Fig. 3 is a block diagram to illustrate an electrical configuration of a PC (personal computer) according to the first embodiment of the present invention.

Fig. 4 is a schematic diagram of a RAM (random access memory) in the PC according to the first embodiment of the invention.

Fig. 5 is a schematic diagram of an HDD (hard disk drive) in the PC according to the first embodiment of the invention.

Fig. 6 illustrates transition of data in a print data generating process according to the first embodiment of the invention.

Fig. 7 illustrates a data configuration of a color conversion table according to the first embodiment of the present invention.

Fig. 8 is a flowchart to illustrate a print data generating process to be executed in the PC according to the first embodiment of the present invention.

Fig. 9 is a flowchart to illustrate a transparency applying process to be executed in the print data generating process according to the first embodiment of the present invention.

Fig. 10 illustrates a print setting window to be displayed on a monitor screen of the PC according to the first embodiment of the present invention.

Fig. 11 is a flowchart to illustrate a transparency applying process to be executed in the print data generating process according to a second embodiment of the present invention.

Fig. 12 is a flowchart to illustrate a print data generating process to be executed in a PC according to a third embodiment of the present invention.

Fig. 13 illustrates a window to be displayed on a monitor screen of the PC according to the third embodiment of the present invention.

Detailed Description

Hereinafter, embodiments according to aspects of the present invention will be described with reference to the accompanying drawings.

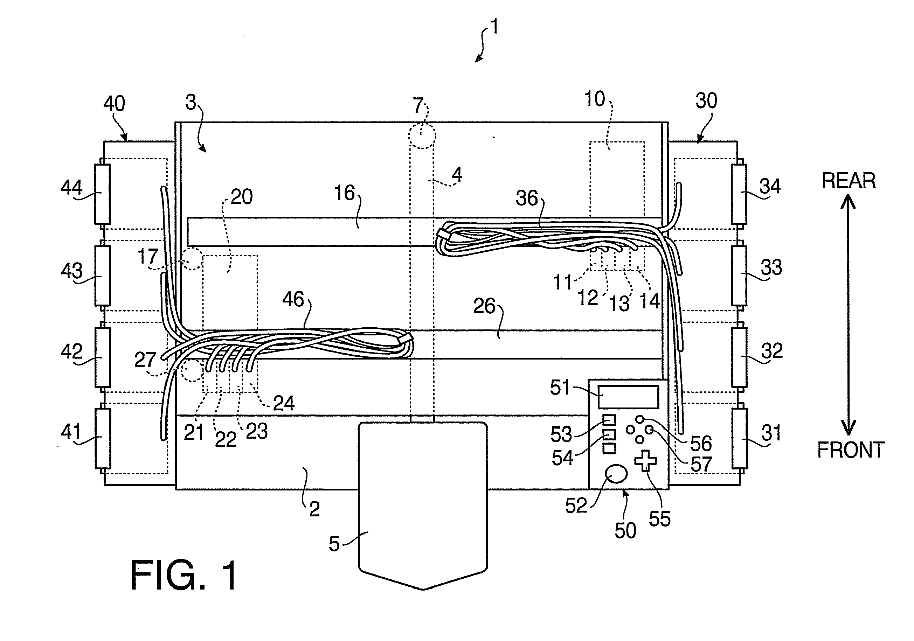

An inkjet printer 1 according to an embodiment of the present invention will be described with reference to Fig. 1. The inkjet printer 1 is a known printing apparatus, which is capable of printing an image on a piece of fabric. Fig. 1 is a plane view of the inkjet printer 1 according to the first embodiment of the present invention.

As shown in Fig. 1, the inkjet printer 1 includes a flat base plate 2 at a bottom and a cover 3 to cover the entire body of the inkjet printer 1. The base plate 2 has longer sides which extend in a right-and-left (horizontal) direction in Fig. 1, and a rail 4 are aligned in parallel with a front-rear direction as indicated by an arrow at an approximate center of the base plate 2. The rail 4 supports a platen 5, which is interchangeable and movable in the front-rear direction (i.e., an auxiliary direction) along the rail 4. The platen 5 is carried along the rail 4 by a platen drive motor 7 being a stepping motor, which is provided at a rear end portion of the rail 4. The platen 5 is a substantially rectangular-shaped plate, on which a recording medium (e.g., a T-shirt) is placed.

At an approximately center but a relatively rear (i.e., closer to an upper side in Fig. 1) of the cover 3, above the platen 5, a first guide rail 16 to guide a first carriage 10 with four inkjet heads 11-14 mounted thereon is provided. In the vicinity of a left-hand end of the first guide rail 16, a first carriage motor 17 to drive the first carriage 10 is provided, while a pulley (not shown) is provided in the vicinity of a right-hand end of the first guide rail 16. Further, a carriage belt (not shown) is drawn between the first carriage motor 17 and the pulley under the first guide rail 16. The carriage belt is fixed to the first carriage 10 so that the first carriage 10 is reciprocated along the first guide rail 16 in the right-and-left direction (i.e., a main scanning direction) when the carriage motor 17 is activated.

On the right-hand end of the cover 3, a first ink cartridge storage 30, in which four ink cartridges 31-34 having inks therein are detachably attached, is provided. Each of the ink cartridges 31-34 is connected to each of inkjet heads 11-14 by flexible ink supplying tubes 36 so that the inks stored in the ink cartridges 31-34 are supplied to each channel of the inkjet heads 11-14. According to the present embodiment, all of the inkjet heads 11-14 are provided to eject white ink therefrom, and the ink cartridges 31-34 respectively contain white ink.

At an approximately center but a relatively front (i.e., closer to a lower side in Fig. 1) portion of the cover 3, above the platen 5, a second guide rail 26, in parallel with the first guide rail 16, to guide a second carriage 20 with four inkjet heads 21-24 mounted thereon is provided. Further, a carriage belt (not shown) is drawn between the second carriage motor 27 and a pulley (not shown) under the second guide rail 26. The carriage belt is fixed to the second carriage 20 so that the second carriage 20 is reciprocated along the second guide rail 26 in the right-and-left direction (i.e., the main scanning direction) when the carriage motor 27 is activated.

In a left-end portion of the cover 3, a second ink cartridge storage 40, in which four ink cartridges 41-44 are stored, is provided. The ink cartridges 41-44 are respectively connected to the inkjet head 21-24 through ink supplying tubes 46 so that the inks in the ink cartridges 41-44 are supplied to each channel of the inkjet heads 21-24. The four ink cartridges 41-44 contain cyan (C) ink, magenta (M) ink, yellow (Y) ink, and black (K) ink respectively.

Each of the inkjet heads 11-14 in the first carriage 10 and the inkjet heads 21-24 in the second carriage 20 is provided with a plurality of (for example, 128) ejection cannels (not shown) through which the ink is conveyed. Each of the channels is provided with a piezoelectric actuator (not shown), which is activated individually, to eject an ink drop downward onto the recording medium from ejection nozzles (not shown) that are open at a nozzle surface of each of the inkjet heads 11-14, 21-24. Further, at one of the right-hand end and the left-hand end of the reciprocative range of each of the first and second carriages 10, 20, a maintenance mechanism (not shown) such as a capping unit and a purge unit for the inkjet heads 11-14, 21-24 is provided.

At right-hand front of the inkjet printer 1 is provided an operation panel 50 through which a user inputs an instruction for the inkjet printer 1. The operation panel 50 includes a display 51, a print start button 52, a print cancel button 53, and a platen feed button 54, a direction key 55, an error indicator 56, and a data reception indicator 57. The display 51 is to display various information concerning, for example, operations in the inkjet printer 1. The print start button 52 is a button to be operated when a print operation is started. The cancel button 53 is a button to be operated when the print operation is ceased. When the platen feed button 54 is operated, the platen 5 is moved to a position wherein the fabric such as a T-shirt as the recording medium can be set on and removed from the platen 5. The direction key 55 is operated when, for example, the user selects an option concerning operations to be executed. The error indicator 56 is a lamp to be lit when an error occurs in the inkjet printer 1. The data reception indicator 57 is a lamp to be lit when print data is received in the inkjet printer 1.

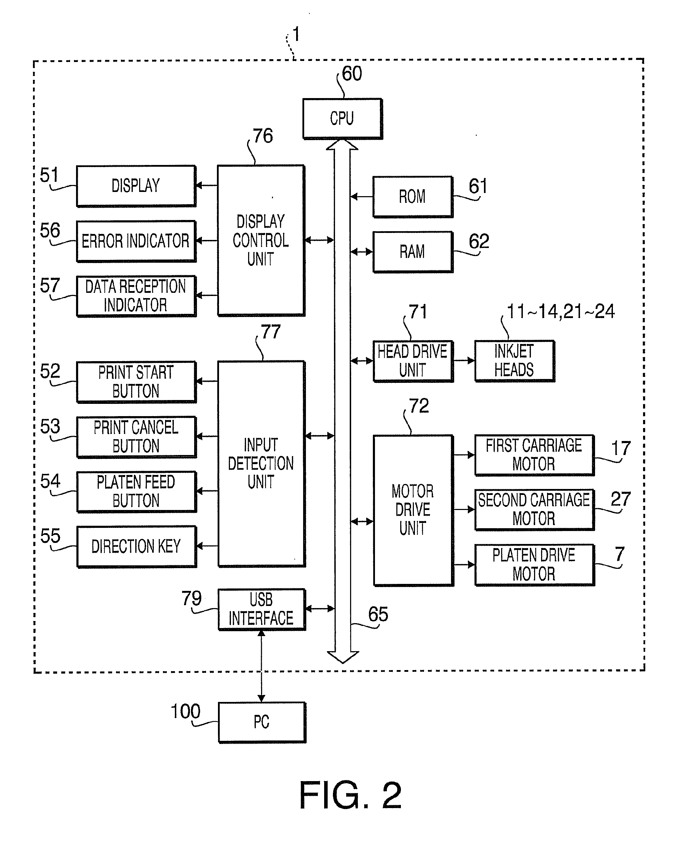

Next, referring to Fig. 2, an electrical configuration of the inkjet printer 1 will be described. Fig. 2 is a block diagram showing the electrical configuration of the inkjet printer 1 according to the present embodiment of the invention. As shown in Fig. 2, the inkjet printer 1 is provided with a CPU 60 that controls the entire operation in the inkjet printer 1. The CPU 60 is connected with a ROM 61, a RAM 62, a head drive unit 71, a motor drive unit 72, a display control unit 76, an input detection unit 77, and a USB interface 79. These components are connected to one another through a bus 65.

The ROM 61 includes a program storage area, wherein control programs to be executed by the CPU 60 to control operations of the inkjet printer 1 and printing programs to be executed for the printing operations are stored, and a program-related information storage area, wherein various information such as parameter settings, initial values, and data to be used in the programs are stored. Further, the ROM 61 may include various storage areas.

The RAM 62 in the inkjet printer 1 is provided with several areas including a received print data storing area for storing the print data transmitted from a PC 100, an in-printing data storing area for storing the print data being printed, and various information storing areas for storing various setting information.

The head drive unit 71 is connected to each of the inkjet heads 11-14, 21-24 and activates the piezoelectric actuators being provided to each channel of the inkjet heads 11-14, 21-24.

The motor drive unit 72 is connected to the first carriage motor 17, the second carriage motor 27, and the platen drive motor 7. Thus, the first and the second carriage motors 17, 27, and the platen drive motor 7 are controlled by the motor drive unit 72.

The display control unit 76 executes displaying processes of the display 51, the error indicator 56, and the data reception indicator 57, which are connected to the CPU 60 through the bus 65. The input detection unit 77 detects inputs through the print start button 52, the print cancel button 53, the platen feed button 54, and the direction key 55, which are connected to the CPU 60 through the bus 65. The USB interface 79 which allows communication between the inkjet printer 1 and external devices including the PC 100 through a USB cable (not shown).

With the aforementioned configuration of the inkjet printer 1 according to the embodiment, when the print data transmitted from the PC 100 is received in the inkjet printer 1, the user sets a piece of fabric on the platen 5 and presses the print button 52. Accordingly, the platen 5 with the fabric is moved to rearward in the cover 3 of the inkjet printer 1 along the rail 4 by the platen drive motor 7 so that the position of the first carriage 10 with respect to the platen 5 corresponds to a recording start position. Thereafter, the inkjet heads 11-14 eject the inks as the first carriage 10 is moved from the right-hand side to the left-hand side in the cover 3 according to a recording instruction so that recording of one line is executed. Further, the platen 5 is moved to frontward from the rearward in the cover 3 for an amount corresponding to one line, and the inkjet heads 11-14 eject the inks as the first carriage 10 is moved from the right-hand side to the left-hand side in the cover 3 according to the recording instruction so that recording of the next line is executed. Subsequently, the platen 5 is moved to frontward from the rearward in the cover 3 for the amount corresponding to another one line portion. By repeating this operation, printing in white ink is executed. Next, the inkjet printer 1 moves the platen 5 with the fabric to frontward so that the position of the second carriage 20 with respect to the platen 5 corresponds to the recording start position. The second carriage 20 is driven similarly to the first carriage 10 as described above so that the colored (CMYK) inks are ejected onto the fabric according to the recording instruction. At the end of the printing operation, the platen 5 is fed forth to a removable position wherein the fabric can be removed, thus the user removes the fabric which underwent the printing operation.

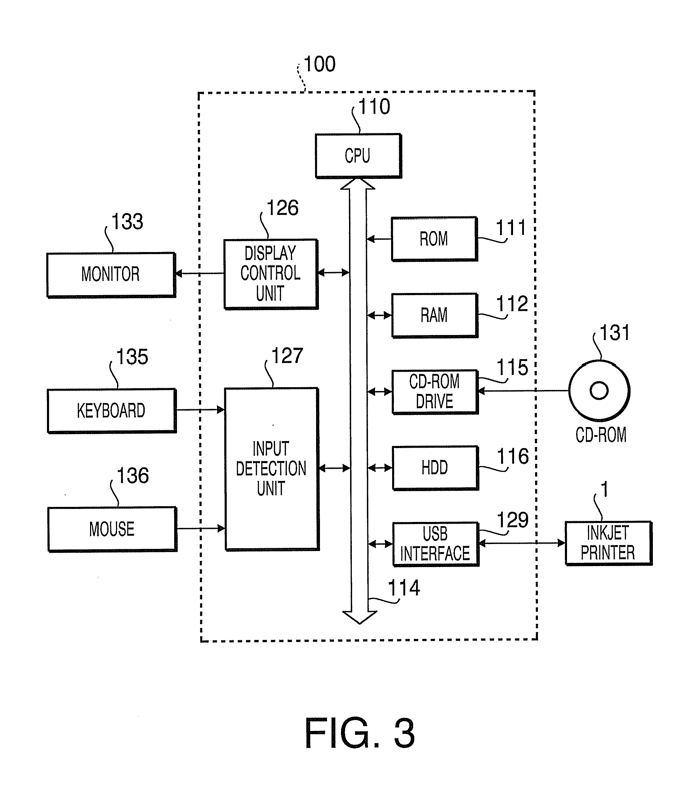

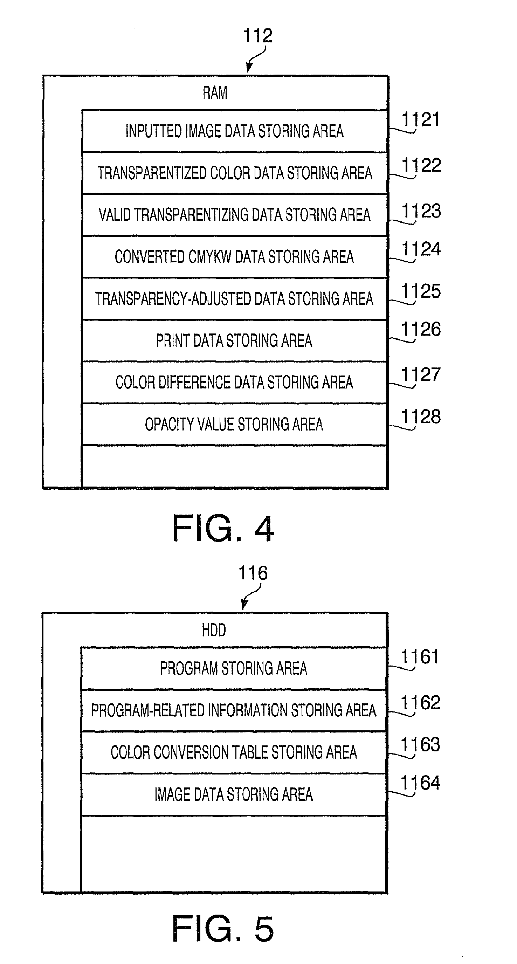

Next, a configuration of the PC 100 will be described with reference to Figs. 3-5. Fig. 3 is a block diagram of an electrical configuration of the PC 100 according to the present embodiment of the invention. Fig. 4 is a schematic diagram of a RAM 112 in the PC 100 according to the present embodiment of the invention. Fig. 5 is a schematic diagram of an HDD 116 in the PC 100 according to the present embodiment of the invention. The PC 100 is connected to the inkjet printer 1 through a standardized communication cable, which is for example a USB. In the PC 100, print data is generated based on image data created by the user using various applications, and the print data is transmitted to the inkjet printer 1.

As shown in Fig. 3, the PC 100 is provided with a CPU 110 which controls the entire operation in the PC 100. The CPU 110 is connected with a ROM 111, a RAM 112, a CD-ROM drive 115, an HDD 116, a display control unit 126, an input detection unit 127, and a USB interface 129. These components are connected to one another through a bus 114.

The ROM 111 stores various information to be used in controlling programs, such as BIOS, to be executed by the CPU 110. The CD-ROM drive 115 is for reading data from a CD-ROM 131 inserted therein as a storage medium of data. The CD-ROM 131 stores data including a printer driver, which is a program to create the print data, and various settings, tables, and data to be used in the program. The data in the CD-ROM 131 is read by the CD-ROM drive 115 and stored in predetermined areas (see Fig. 5) in the HDD 116.

The display control unit 126 controls displaying processes to display information concerning an operation on a screen of a monitor 133. The input detection unit 127 is connected to input devices including a keyboard 135 and a mouse 136, which are operated by the user, and operations by the user to the input devices are detected by the input detection unit 127. The USB interface 129 allows communication between the PC 100 and external devices including the inkjet printer 1 through a USB cable (not shown).

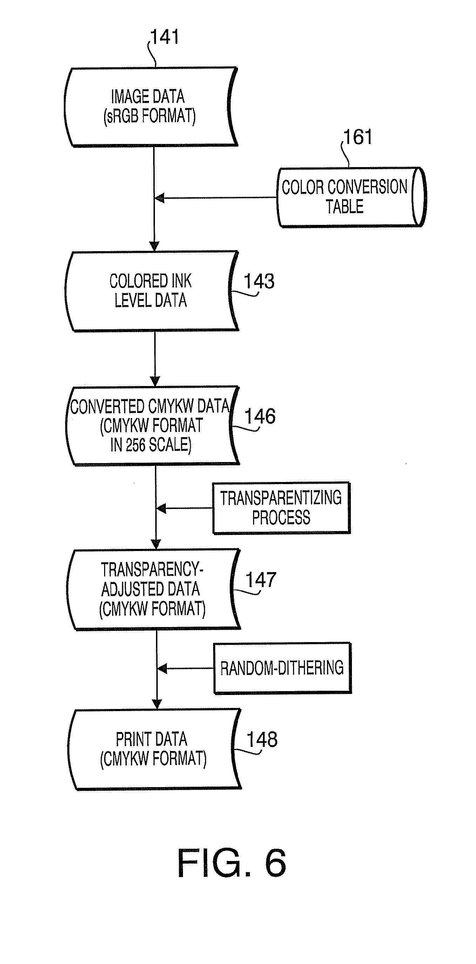

As shown in Fig. 4, the RAM 112 is provided with several storage areas including an inputted image data storing area 1121, a transparentized color data storing area 1122, a valid transparentizing data storing area 1123, a converted CMYKW data storing area 1124, a transparency-adjusted data storing area 1125, a print data storing area 1126, a color difference data storing area 1127, and an opacity value storing area 1128. The inputted image data storing area 1121 is a storage area for temporarily storing originally inputted image data 141 (see Fig. 6). The print data for printing an image is created based on the image data being stored in the inputted image data storing area 1121. The transparentized color data storing area 1122 is a storage area for storing scale values of a color in the image to be converted into transparent. The color to be converted into transparent will be referred to as a transparentized color hereinbelow. The valid transparentizing data storing area 1123 is a storage area for storing a maximum value of color differences for pixels in the inputted image data which are to be affected by transparentizing. That is, pixels in the inputted image data within a range between the transparentized color and the maximum value are transparentized to some extent. The maximum value will be referred to as a valid transparentizing value. The converted CMYKW data storing area 1124 is a storage area for storing converted CMYKW data 146 (see Fig. 6), which is converted from the inputted image data 141. The transparency-adjusted data storing area 1125 is a storage area for storing transparency-adjusted data 147 (see Fig. 6), which is the converted CMYKW data 146 (see Fig. 6) including a result of transparentizing. The print data storing area 1126 is a storage area for storing print data 148 (see Fig. 6), which is created based on the transparency-adjusted data 147. The opacity value storing area 1128 is a storage area for storing a value which indicates opacity of pixels to be transparentized. When the opacity value of a pixel indicates 0, a color of the pixel is transparent, and when the opacity value of a pixel indicates 1, the pixel is not transparentized at all. Functions of the above-mentioned data will be described later in detail.

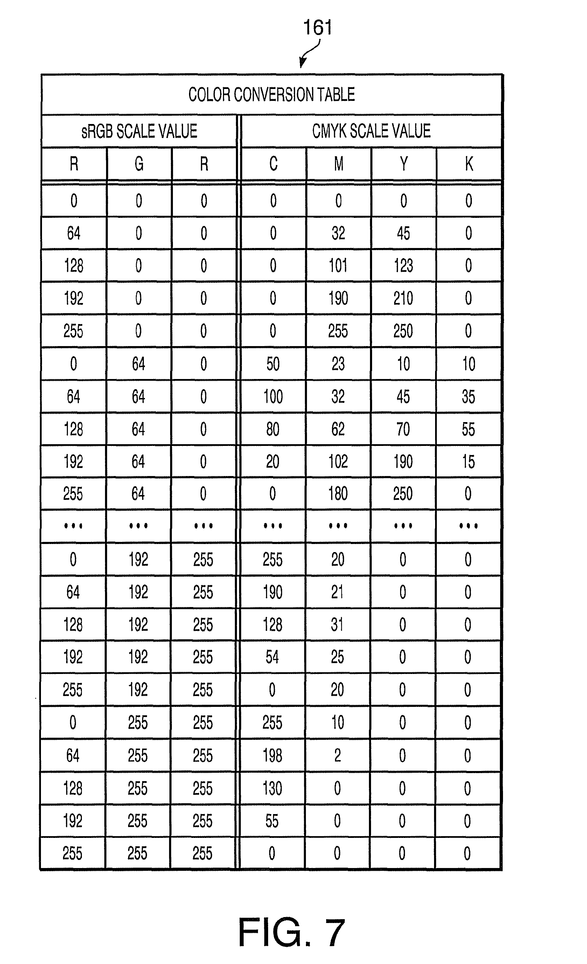

As shown in Fig. 5, the HDD 116 contains several storage areas including a program storing area 1161, a program-related information storing area 1162, a color conversion table storing area 1163, and an image data storing area 1164. The program storing area 1161 is a storage area for storing various programs to be executed in the PC 100 including the printer driver. The program-related information storing area 1162 is a storage area for storing information concerning settings, initial values, and data necessary for executing the programs. The color conversion table storing area 1163 is a storage area for storing a color conversion table 161 (see Fig. 7). The color conversion table 161 defines correspondence between color information of the inputted image data 141, which is represented in RGB (red, green, blue) format, and a colored ink level, which is represented in a CMYK format. The color conversion table 161 is thus used for converting the inputted image data 141 into a colored ink level in CMYK format. The image data storing area 1164 is a storage area for storing a plurality of pieces of image data 141. Functions of the above-mentioned data will be described later in detail.

Hereinafter, with reference to Figs. 6 and 7, the data to be generated in the print data generating process according to the present embodiment will be described. Fig. 6 illustrates transition of data in the print data generating process according to the first embodiment of the invention. Fig. 7 illustrates a data configuration of the color conversion table 161 according to the first embodiment of the present invention.

As shown in Fig. 6, the print data 148 is generated based on the image data 141 stored in the inputted image data storing area 1121 in the RAM 112. The image data 141 is the data specified to be printed by the user among a plurality of pieces of image data which have been created by the user using various applications such as an application designed for editing graphics. Thus, the image data 141 is saved in the image data storing area 1164 of the HDD 116. Specifically, the image data 141 according to the present embodiment is represented in 256 color scale of the image data in sRGB format. The sRGB is an international standard of color space established by the IEC (International Electrotechnical Commission), and various PC peripherals including digital cameras, printers, and monitors perform color adjustment according to the sRGB to minimize a color difference between the inputted color and output color.

When an image is printed in a printing apparatus such as the inkjet printer 1 by ejecting the inks, a color of each pixel composing the image, represented in the sRGB format, is converted into CMYKW format to be CMYKW data 146. The CMYKW format is a method to reproduce a color in cyan (C), magenta (M), yellow (Y), black (K), and white (W). A color of each pixel is defined by combination of the C-scale value, M-scale value, Y-scale value, K-scale value, and W-scale value, which are respectively defined in 256 scales. When the image data 141 is converted into the CMYKW data 146, each of the C, M, Y, K-scale values are obtained based on the color conversion table 161. Additionally, the W-scale value representing a color of white is set to be 0 (zero).

The color conversion table 161 is a table for converting the input data in 256 color scale in the sRGB format into the output data in 256 color scale in the CMYK format, which is the format to represents the image in CMYK color scale values. As shown in Fig. 7, each of the CMYK scale values is defined to correspond to an sRGB scale value respectively The sRGB scale values of each pixel which composes the image data 141 are converted into the corresponding CMYK scale values respectively based on the color conversion table 161. Thus, the image data 141 is converted in the colored ink level data 143 according to the color conversion table 161. The color conversion table 161 is created in a known method and stored preliminarily in the HDD 116.

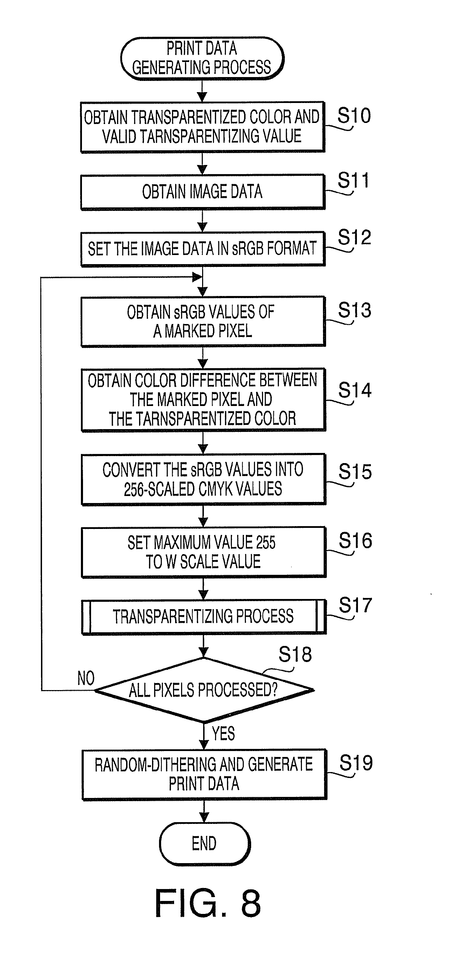

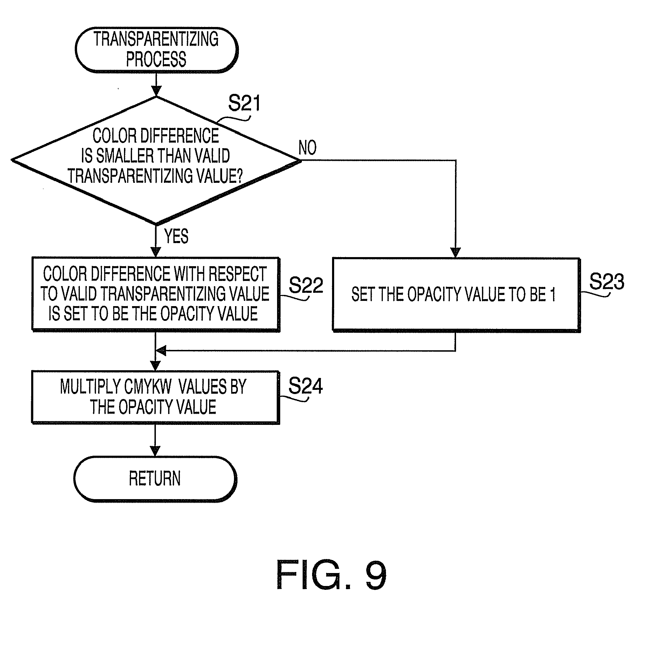

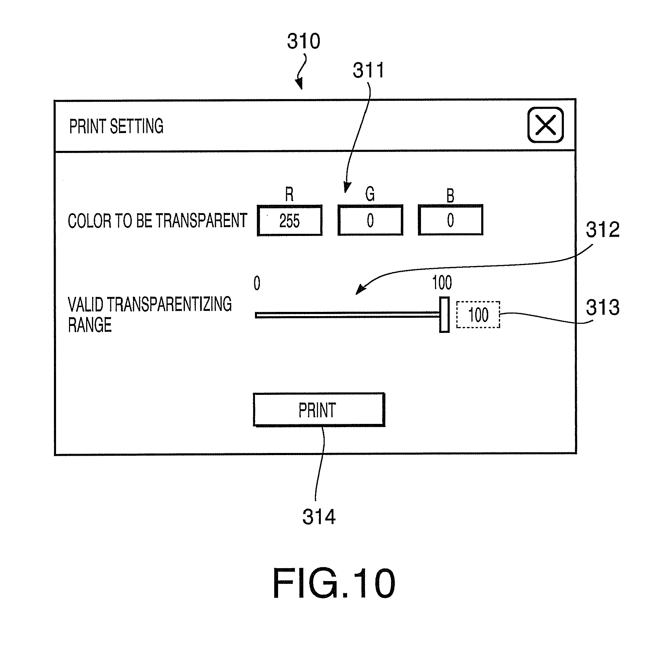

Next, the print data generating process according to the present embodiment will be described with reference to Figs. 8-10. Fig. 8 is a flowchart to illustrate the print data generating process to be executed in the PC 100 according to the first embodiment of the present invention. Fig. 9 is a flowchart to illustrate a transparency applying process to be executed in the print data generating process according to the first embodiment of the present invention. Fig. 10 illustrates a print setting window to be displayed on a monitor screen of the PC 100 according to the first embodiment of the present invention.

A print setting window 310 to be displayed on the screen of the monitor 133 will be described with reference to Fig. 10. The print setting window 310 includes transparentized color fields 311, a valid transparentizing range adjuster 312, a valid transparentizing maximum value indicator field 313, and a print button 314. The transparentized color fields 311 include an R field, a G field, and a B field, in which each of RGB values of the color to be transparentized is entered. The valid transparentizing range adjuster 312 is an adjuster knob to set the valid transparentizing value. The transparentizing value set by the valid transparentizing range adjuster 312 is indicated in the valid transparentizing maximum value indicator field 313. In the present embodiment, the valid transparentizing maximum value indicator field 313 is configured not to accept a user's input through the keyboard 135 or other input devices. The print button 314 is a button to be pressed by the user to provide an instruction to the PC 100 and the inkjet printer 1 to start printing an image according to print data in which the transparentized color and the valid transparentizing value are reflected.

Next, with reference to Figs. 8 and 10, a series of behaviors of the PC 10 to perform the print data generating process will be described. The series of behaviors is started when the print button 314 in the print setting window 310 is pressed and the printer driver in the PC 100 is activated. When the printer driver is activated, CPU 110 starts the print data generating process according to a print data generating program.

When the print data generating process starts, as shown in Fig. 8, in S10, the RGB values of the transparentized color and the valid transparentizing value as entered by the user in the print setting window 310 are obtained. In S11, the obtained RGB values are set in the transparentized color data storing area 1122 of the RAM 112, and the valid transparentizing value is set in the valid transparentizing data storing area 1123. Further, the CPU 110 obtains image data 141 to be printed from the image data storing area 1164 of the HDD 116. In S12, the obtained image data 141 is set in the inputted image data storing area 1121 of the RAM 112.

In S13, one of pixels which compose the image data 141 is targeted as a currently marked pixel, and the sRGB values of the marked pixel are obtained. In S14, a color difference between the marked pixel and the transparentized color obtained in S10 is calculated. The calculated result is stored in the color difference data storing area 1127 of the RAM 112. When the color difference is calculated, the scale values of the marked pixel and the transparentized color are converted from the sRGB format into L*a*b* format. In the L*a*b* format, a color of a pixel is indicated by L* (i.e., lightness), a* (i.e., a position between red and green), and b* (i.e., a position between blue and yellow). According to the present embodiment, the HDD 116 contains a conversion table (not shown) to be referred to when image data in the sRGB format is converted into image data in the L*a*b* format. When the L*a*b* values of the transparentized color are L1, a1, and b1 respectively, and when the L*a*b* values of the marked pixel are L2, a2, and b2, a color difference dE is obtained by a following Formula (1):

$$dE = \sqrt{(L1 - L2)^2 + (a1 - a2)^2 + (b1 - b2)^2} \quad \text{(Formula 1)}$$

Thus, the color difference dE indicates a distance between the transparentized color and the marked pixel in the L*a*b* color space.

Following S14, in S15, the image data 141 in the sRGB format stored in the inputted image data storing area 1121 is converted into CMYKW format to be converted CMYKW data 146. Specifically, the RGB values in the image data 141 are converted into the converted CMYKW data 146 according to the color conversion table 161. Further, in S 16, the W scale values in the converted CMYKW data 146 are replaced with a value "255," which is a maximum scale value. Thereafter, in S17, a transparency applying process, which will be described later in detail, is applied to the converted CMYKW data 146.

Following the transparency applying process in S17, in 18, it is determined as to whether the above steps S 13-S 17 are applied to all the pixels included in the image data 141. If a pixel remains unprocessed (S18: NO), the process returns to S13, and a next pixel is targeted as a marked pixel. If all the pixels are processed (S18: YES), in S19, a known random dithering process is applied to the transparency-adjusted data 147. Thus, print data 148, in which a color of each pixel therein is binarized (indication as to whether each of the CMYKW inks is ejected or not ejected), is created. The print data generating process is terminated thereafter. In the present embodiment, the inkjet heads 11-14 are controlled according to the binarized W scale data in the print data. Namely, the W scale data in the print data is commonly used to control the inkjet heads 11-14.

Next, with reference to Fig. 9, the transparency applying process will be described. When the transparency applying process starts, the color difference between the transparentizing color and the color of the marked pixel is obtained from the color difference data storing area 1127 of the RAM 112. Additionally, the valid transparentizing value is obtained from the valid transparentizing data storing area 1123 of the RAM 112. In S21, it is examined as to whether the color difference is smaller than the valid transparentizing value. When the color difference is smaller than the valid transparentizing value (S21: YES), a ratio of the color difference with respect to the valid transparentizing value is calculated. In S22, the obtained ratio is set to be the opacity value and stored in the opacity value storing area 1128 of the RAM 112. It is to be noted that the opacity value is greater than or equal to 0 and smaller than 1. When the color difference is greater than or equal to the valid transparentizing value (S21: NO), in S23, the opacity value is set to be 1 and stored in the opacity value storing area 1128 of the RAM 112.

In S24, the opacity value in the opacity value storing area 1128 is obtained, and each of the CMYKW values of the marked pixel is multiplied by the opacity value. Thus, the converted CMYKW data 146 in the converted CMYKW data storing area 1124 of the RAM 112 is converted into CMYKW data with the opacity being applied. The opacity-applied CMYKW data, which is the transparency-adjusted data 147, is stored in the transparency-adjusted data storing area 1125 of the RAM 112. The transparency applying process is terminated thereafter.

According to the above processes, print data, in which a color of pixels with the designated color is transparent and colors of pixels within the range between the transparentized color and the valid transparentizing value are transparentized to some extent, is generated. Therefore, when the color difference between the transparentized color and the marked pixel is smaller, the extent of the opacity of the marked pixel becomes smaller (i.e., transparency increases). On the other hand, when the color difference is greater, the extent of the opacity of the marked pixel becomes higher (i.e., transparency decreases). Further, when the color difference is greater than the valid transparentizing value, the opacity value is set to be 1; therefore, the color of the marked pixel is not transparentized at all. In other words, when the opacity is set to be 1, the color of the marked pixel remains unaffected by transparentizing. Thus, gradual transient of only the pixels with the designated color and the pixels with colors close to the designated color can be reproduced in the output image.

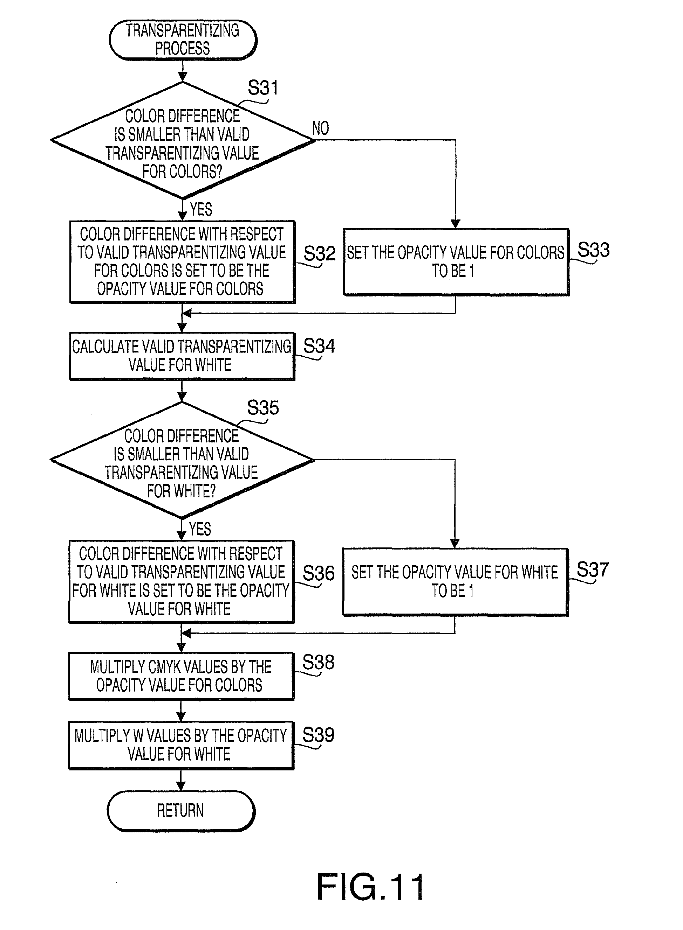

Next, a second embodiment of the present invention will be described with reference to Fig. 11. Fig. 11 is a flowchart to illustrate the transparency applying process to be executed in the print data generating process according to a second embodiment of the present invention. A PC 200 according to the second embodiment is configured to be similar to the PC 100 in the first embodiment but different in a function that opacity of colors of pixels other than white (colored pixels) in the print data can be set to be higher than opacity of white pixels. The PC 200 can behave similarly to the PC 100 in the print data generating process in the first embodiment except the transparency applying process. Therefore, structures and behaviors similar to those of the PC 100 will be referred to by identical reference numerals, and description of those will be omitted.

When the print data generating process (see Fig. 8) starts, S10-S16 are performed similarly to the print data generating process in the first embodiment. In S17, the transparency applying process as shown in Fig. 11 is executed.

When the transparency applying process starts, in S31, it is examined as to whether the color difference between the marked pixel and the transparentized color is smaller than a valid transparentizing value for colors. In the present embodiment, the valid transparentizing value for colors is a valid transparentizing value for colored pixels stored in the valid transparentizing date storing area 1123 of the RAM 112. That is, the valid transparentizing value for colors is a maximum value of color differences for colored pixels, of which colors are indicated by the CMYK scale values, in the inputted image data to be affected by transparentizing.

In S31, if the color difference is smaller than the valid transparentizing value for colors (S31: YES), a ratio of the color difference with respect to the valid transparentizing value for colors is calculated. In S32, the calculated ratio is set to be the opacity value for colors and stored in the opacity value storing area 1128 of the RAM 112. The opacity value for colors is a value which indicates opacity of colored pixels to be transparentized. When the color difference is smaller than the valid transparentizing value for colors (S31: YES), the opacity value for colors becomes greater than or equal to 0 and smaller than 1.

When the color difference is greater than or equal to the valid transparentizing value for colors (S31: NO), in S33, the opacity value for colors is set to be 1 and stored in the opacity value storing area 1128 of the RAM 112.

In S34, a maximum value of color differences for white pixels, of which colors are indicated by W scale values, to be affected by transparentizing is calculated. In the present embodiment, the maximum value of color differences for white pixels will be referred to as a valid transparentizing value for white. The valid transparentizing value for white is obtained by multiplying the valid transparentizing value for colors by a value being larger than 1. In the present embodiment, the valid transparentizing value for colors is multiplied by 1.5, which is a value obtained through various experiences and experiments of the designers. The obtained valid transparentizing value is stored in the valid transparentizing data storing area 1123 of the RAM 112.

In S35, it is examined as to whether the color difference is smaller than the obtained valid transparentizing value for white. When the color difference is smaller than the valid transparentizing value for white (S35: YES), a ratio of the color difference with respect to the valid transparentizing value for white is calculated. In S36, the calculated ratio is set to be the opacity value for white and stored in the opacity value storing area 1128 of the RAM 112. The opacity value for white is a value which indicates opacity of white pixels to be transparentized. When the color difference is smaller than the valid transparentizing value for white (S35: YES), the opacity value for white becomes greater than or equal to 0 and smaller than 1.

When the color difference is greater than or equal to the valid transparentizing value for white (S35: NO), in S37, the opacity value for white is set to be 1 and stored in the opacity value storing area 1128 of the RAM 112.

In S38, the opacity value for colors in the opacity value storing area 1128 is obtained, and each of the CMYK values of the marked pixel is multiplied by the opacity value for colors. Thus, the CMYK data in the converted CMYKW data 146 in the converted CMYKW data storing area 1124 of the RAM 112 is converted into opacity-applied CMYK data.

In S39, the opacity value for white in the opacity value storing area 1128 is obtained, and the W value of the marked pixel is multiplied by the opacity value for white. Thus, the W data in the converted CMYKW data 146 in the converted CMYKW data storing area 1124 of the RAM 112 is converted into opacity-applied W data. The opacity-applied CMYK and W data, which is the transparency-adjusted data 147, is stored in the transparency-adjusted data storing area 1125 of the RAM 112. The transparency applying process is terminated thereafter.

Following the transparency applying process, the process returns to S18 in the print data generating process shown in Fig. 8. Thus, in S18, it is determined as to whether the above steps are applied to all the pixels included in the image data 141. If a pixel remains unprocessed (S18: NO), the process returns to S13, and a next pixel is targeted as a marked pixel. If all the pixels are processed (S 18: YES), in S 19, a known random dithering process is applied the transparency-adjusted data 147. Thus, print data 148, in which a color of each pixel therein is binarized (indication as to whether each of the CMYKW inks is ejected or not ejected), is created.

According to the second embodiment described above, print data, the opacity value for white, which is a ratio of the color difference with respect to the valid transparentizing value for white, is smaller than the opacity value for white, which is a ratio of the color difference with respect to the valid transparentizing value for colors. Therefore, the extent of the transparency of the W scale value in the marked pixel is higher than the extent of the transparency of the CMYK scale values in the same marked pixel. Thus, when colors in the image change gradually from the transparentized color to another colors which are not transparentized, an amount of the white ink to be used to form a white portion in the image is reduced to a greater extent than amounts of the colored inks to be used to form colored portions so that natural and gradual transient of the colors can be achieved in the output image.

Although examples of carrying out the invention have been described, those skilled in the art will appreciate that there are numerous variations and permutations of the print data generating device that fall within the spirit and scope of the invention as set forth in the appended claims. It is to be understood that the subject matter defined in the appended claims is not necessarily limited to the specific features or act described above. Rather, the specific features and acts described above are disclosed as example forms of implementing the claims.

For example, in the second embodiment, the valid transparentizing value for colors is multiplied by the predetermined value 1.5 in order to determine the valid transparentizing value for white for the W scale value. However, the predetermined value is not limited to 1.5, but may be any other value as long as the value is greater than 1. For another example, the valid transparentizing value for white may be entered directly and manually through the print setting window 310. Further, the color difference may be calculated by referring to a predetermined conversion table, which is stored in, for example, the HDD 116.

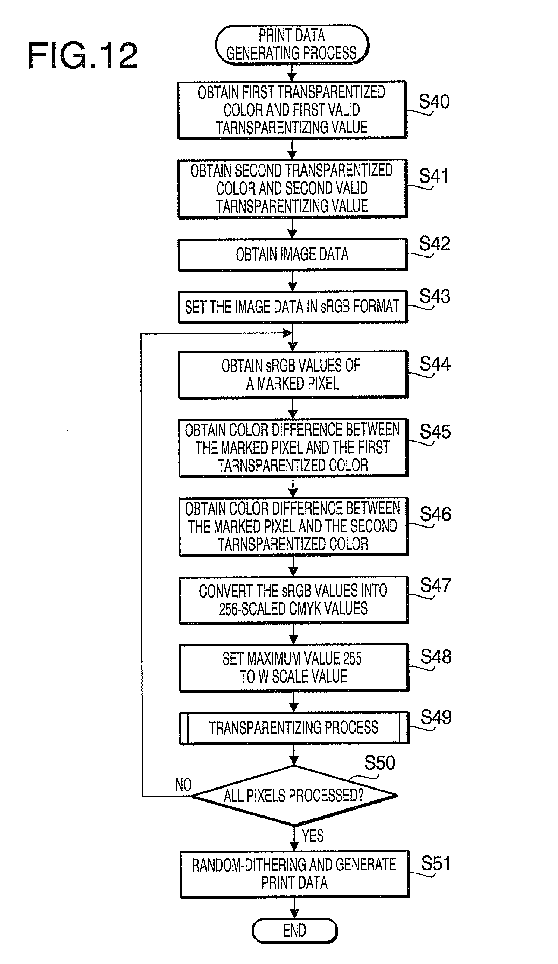

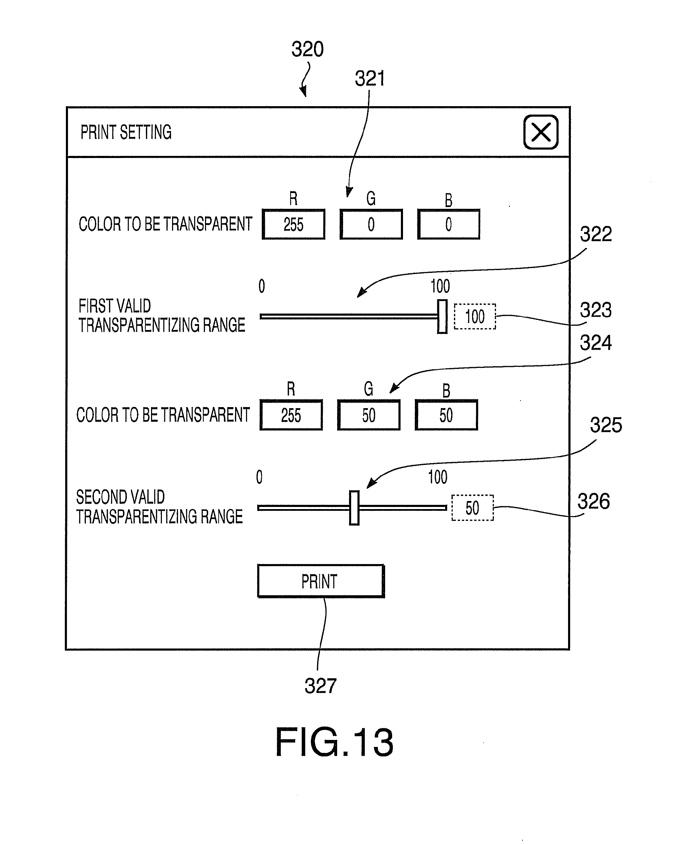

Furthermore, in the above embodiments, the transparentizing color and the valid transparentizing value being a pair are provided; however, a plurality of pairs of the transparentizing color and the valid transparentizing value may be provided. A print data generating process with two pairs of the transparentizing color and the valid transparentizing value will be described with reference to Figs. 11-13. Fig. 12 is a flowchart to illustrate the print data generating process to be executed in a PC 300 according to a third embodiment of the present invention. Fig. 13 illustrates a window to be displayed on a monitor screen of the PC 300 according to the third embodiment of the present invention.

The PC 300 according to the third embodiment is configured to behave similarly to the PC 100 in the first embodiment. Therefore, structures and behaviors similar to those of the PC 100 will be referred to by identical reference numerals, and description of those will be omitted.

A print setting window 320 to be displayed in the monitor screen of the monitor 133 will be described with reference to Fig. 13. The print screen 320 includes a first transparentized color fields 321, a first valid transparentizing range adjuster 322, a first valid transparentizing maximum value indicator field 323, a second transparentized color fields 324, a second valid transparentizing range adjuster 325, a second valid transparentizing maximum value indicator field 326, and a print button 327.

The first transparentized color fields 321 include an R field, a G field, and a B field, in which each of RGB values of a color to be transparentized is entered to designate a first transparentized color. Similarly, the second transparentized color fields 324 include an R field, a G field, and a B field, in which each of RGB values of another color to be transparentized is entered to determine a second transparentized color. The first and second valid transparentizing range adjusters 322, 325 are adjuster knobs to set a first valid transparentizing value and a second valid transparentizing value respectively. The transparentizing values set by the first and the second valid transparentizing range adjusters 322, 325 are respectively indicated in the first and the second valid transparentizing maximum value indicator fields 323, 326. In the present embodiment, the first and the second valid transparentizing maximum value indicator fields 323, 326 are configured not to accept the user's input through the keyboard 135 or other input devices. The first transparentized color designated through the first transparentized color fields 321 and the first valid transparentizing color designated through the first valid transparentizing range adjuster 322 will be referred to as first transparency setting items. The second transparentized color designated through the second transparentized color fields 324 and the second valid transparentizing color designated through the second valid transparentizing range adjuster 325 will be referred to as second transparency setting items. The print button 327 is a button to be pressed by the user to provide an instruction to the PC 300 and the inkjet printer 1 to start printing an image according to print data in which the transparentized colors and the valid transparentizing values are reflected.

When the print data generating process according to the third embodiment starts, in S40, as shown in Fig. 12, the RGB values of the first transparentized color and the first valid transparentizing value as entered by the user in the print setting window 310 are obtained. The RGB values of the first transparentized color is stored in the transparentized color data storing data 1122, and the first valid transparentizing value is stored in the valid transparentizing data storing area 1123. In S41, the RGB values of the second transparentized color and the second valid transparentizing value as entered by the user in the print setting window 310 are obtained and stored similarly.

In S42, image data 141 to be printed is obtained from the image data storing area 1164 of the HDD 116. In S43, the obtained image data 141 is set in the inputted image data storing area 1121 of the RAM 112.

In S44, one of pixels which compose the image data 141 is targeted as a currently marked pixel, and the sRGB values of the marked pixel are obtained. In S45, a first color difference between the marked pixel and the first transparentized color obtained in S40 is calculated. The calculated result is stored in the color difference data storing area 1127 of the RAM 112. When the color difference is calculated, the scale values of the marked pixel and the first transparentized color are converted from the sRGB format into L*a*b* format. The first color difference is thus obtained by the formula described in the first embodiment. In S46, a second color difference between the marked pixel and the second transparentized color obtained in S41 is calculated similarly and stored in the color difference data storing area 1127.

In S47, the image data 141 in the sRGB format stored in the inputted image data storing area 1121 is converted into CMYKW format to be converted CMYKW data 146. Further, in S48, the W scale values in the converted CMYKW data 146 are replaced with a value "255," which is a maximum scale value. In S49, a transparency applying process, which will be described later in detail, is applied to the converted CMYKW data 146.

Following the transparency applying process in S49, in 50, it is determined as to whether the above steps S44-S49 are applied to all the pixels included in the image data 141. If a pixel remains unprocessed (S50: NO), the process returns to S44, and a next pixel is targeted as a marked pixel. If all the pixels are processed (S50: YES), in S51, a known random dithering process is applied to the transparency-adjusted data 147. Thus, print data 148, in which a color of each pixel therein is binarized (indication as to whether each of the CMYKW inks is ejected or not ejected), is created. The print data generating process is terminated thereafter. In the present embodiment, the inkjet heads 11-14 are controlled according to the binarized W scale data in the print data. Namely, the W scale data in the print data is commonly used to control the inkjet heads 11-14.

Next, with reference to Fig. 11, the transparency applying process according to the third embodiment will be described. When the transparency applying process starts, steps S31-37 are performed with the first transparency setting items and the first color difference. Thus, a first opacity value for colors and a first opacity values for white are calculated and stored in the opacity storing area 1128 of the RAM 112. Thereafter, steps S31-37 are performed with the second transparency setting items and the second color difference. Thus, a second opacity value for colors and a second opacity values for white are calculated and stored in the opacity storing area 1128.

Thereafter, the first opacity value for colors and the second opacity value for colors are compared, and the smaller value becomes the opacity value for colors, by which the CMYK scale values of the marked pixel are multiplied in S38. Further, the first opacity value for white and the second opacity value for white are compared, and the smaller value becomes the opacity value for white, by which the W-scale value of the marked pixel is multiplied in S39. Thus, the converted CMYKW data 146 in the converted CMYKW data storing area 1124 of the RAM 12 is converted into opacity-applied CMYKW data. The transparency applying process is terminated thereafter.

According to the third embodiment, a smaller one of the first and the second opacity values for white and a smaller one of the first and the second opacity values for colors are used in the transparency applying process. Therefore, the range of colors of pixels to be transparentized becomes greater so that a more vivid gradation effect with respect to the inputted image can be obtained.

It is to be noted in the third embodiment that the two pairs of transparency setting items; however, three or more pairs of transparency setting items can be designated. When three or more pairs of transparency setting items are designated, a smallest value among the opacity values for colors and a smallest value among the opacity values for white can be taken to be the value by which the CMYKW scale values are multiplied.

Alternatively to the transparentizing color fields, the transparentizing colors may be designated by, for example, a color palette which represents the color to be transparentized. Also, the valid transparentizing values may be directly entered in a field in the print setting window through the keyboard 135 or other input devices.

Further, the method to generate the print data 148 from the transparency-adjusted data 147 is not limited to the random-dithering, but may be, for example, a known threshold method. In the threshold method, the transparency-adjusted data 147 can be converted into the CMYKW format in a binary format, which indicates as to whether the inks are to be ejected or not ejected, based on the threshold.

**Claims**

1. A print data generating apparatus to generate print data, which is to be used in a printing apparatus to form an image in a plurality of colors of colorants, based on originally inputted image data representing the image, comprising:

    a transparentized color designating unit to designate a transparentized color, which is a color of pixels in the image data to be converted into transparence;
    a color difference calculating unit to calculate a color difference between color scale values of a currently marked pixel among the pixels in the image data and color scale values of the designated transparentized color;
    a data convertor unit to convert the image data into a colorant-enabled data, which represents the image in scale values of the plurality of colors of colorants; and
    an opacity-adjusted data generating unit to generate opacity-adjusted data, in which color scale values of the pixels in the colorant-enabled data are adjusted according to the color difference calculated by the color difference calculating unit,
    wherein, when the color difference of the marked pixel is calculated to be smaller, the opacity-adjusted data generating unit adjusts the color scale values of the marked pixel to be closer to zero in the opacity-adjusted data so that the color scale values of the marked pixel is adjusted to have lower opacity

2. The print data generating apparatus according to claim 1,
    wherein the opacity-adjusted data generating unit adjusts the color scale values of the marked pixel in the opacity-adjusted data to be zero when the color difference of the marked pixel is calculated to be zero.

3. The print data generating apparatus according to any of claims 1 and 2, comprising:

    a first opacity calculating unit to calculate a first opacity, which is a ratio of the color difference with respect to a first maximum color difference, the first maximum color difference being a designated maximum color difference between the color scale values of the marked pixel and the color scale values of the transparentized color,
    wherein the opacity-adjusted data generating unit adjusts the color scale values of the marked pixel in the opacity-adjusted data by multiplying the color scale values of the marked pixel in the colorant-enabled data by the first opacity

4. The print data generating apparatus according to claim 3, further comprising a first maximum color difference input system, through which the first maximum color difference is entered.

5. The print data generating apparatus according to any of claims 3 and 4,
    wherein the first opacity calculating unit sets the first opacity to be 1 when the color difference calculated by the color difference calculating unit is greater than or equal to the first maximum color difference.

6. The print data generating apparatus according to any of claims 1 through 5,
    wherein the data convertor unit converts the image data into the colorant-enabled data, which represents the image in scale values of the plurality of colors of colorants including a white colorant.

7. The print data generating apparatus according to claim 6,
    wherein the opacity-adjusted data generating unit adjusts the color scale values for the white colorant in the colorant-enabled data to be closer to zero than the color scale values for the colorants other than the white colorant.

8. The print data generating apparatus according to claim 7,
    wherein the opacity-adjusted data generating unit adjusts the color scale values for the white colorant in the colorant-enabled data to a larger extent to be closer to zero than the color scale values for the colorants other than the white colorant.

9. The print data generating apparatus according to any of claims 6 through 8, comprising:

    a second opacity calculating unit to calculate a second opacity, which is a ratio of the color difference with respect to a second maximum color difference, the second maximum color difference being a designated maximum color difference between the color scale value for the white colorant of the marked pixel and the color scale values of the transparentized color,

wherein the opacity-adjusted data generating unit adjusts the color scale values of the marked pixel in the opacity-adjusted data by multiplying the color scale values for the colorants other than the white colorant by the first opacity and multiplying the color scale values for the white colorant by the second opacity.

10. The print data generating apparatus according to claim 9, further comprising a second maximum color difference input system, through which the second maximum color difference is entered.

11. The print data generating apparatus according to any of claims 9 and 10,
wherein the second opacity calculating unit sets the second opacity to be 1 when the color difference calculated by the color difference calculating unit is greater than or equal to the second maximum color difference.

12. The print data generating apparatus according to any of claims 9 through 11, wherein the second maximum color difference is greater than the first maximum color difference.

13. The print data generating apparatus according to any of claims 1 through 12, wherein the image data is represented in a color space configured with colors of RGB, which are red, green, and blue.

14. The print data generating apparatus according to any of claims 1 through 13, wherein the colorant-enabled image data represents the image in a colors of CMYKW, which are cyan, magenta, yellow, black, and white.

15. A method to generate print data to be used in a printing apparatus to form an image, based on originally inputted image data representing the image, in the print data generating apparatus according to claim 1.

16. A computer usable medium to comprise computer readable instructions to control a print data generating apparatus according to the method in claim 15.

FIG. 1

REAR

FRONT

FIG. 2

FIG. 3

112

| RAM | |
|---|---|
| INPUTTED IMAGE DATA STORING AREA | 1121 |
| TRANSPARENTIZED COLOR DATA STORING AREA | 1122 |
| VALID TRANSPARENTIZING DATA STORING AREA | 1123 |
| CONVERTED CMYKW DATA STORING AREA | 1124 |
| TRANSPARENCY-ADJUSTED DATA STORING AREA | 1125 |
| PRINT DATA STORING AREA | 1126 |
| COLOR DIFFERENCE DATA STORING AREA | 1127 |
| OPACITY VALUE STORING AREA | 1128 |
| | |

# FIG. 4

116

| HDD | |
|---|---|
| PROGRAM STORING AREA | 1161 |
| PROGRAM-RELATED INFORMATION STORING AREA | 1162 |
| COLOR CONVERSION TABLE STORING AREA | 1163 |
| IMAGE DATA STORING AREA | 1164 |
| | |

# FIG. 5

141

IMAGE DATA
(sRGB FORMAT)

161

COLOR CONVERSION
TABLE

COLORED INK
LEVEL DATA — 143

CONVERTED CMYKW DATA
(CMYKW FORMAT
IN 256 SCALE) — 146

TRANSPARENTIZING
PROCESS

TRANSPARENCY-
ADJUSTED DATA
(CMYKW FORMAT) — 147

RANDOM-DITHERING

PRINT DATA
(CMYKW FORMAT) — 148

FIG. 6

161

| COLOR CONVERSION TABLE | | | | | | |
|---|---|---|---|---|---|---|
| sRGB SCALE VALUE | | | CMYK SCALE VALUE | | | |
| R | G | R | C | M | Y | K |
| 0 | 0 | 0 | 0 | 0 | 0 | 0 |
| 64 | 0 | 0 | 0 | 32 | 45 | 0 |
| 128 | 0 | 0 | 0 | 101 | 123 | 0 |
| 192 | 0 | 0 | 0 | 190 | 210 | 0 |
| 255 | 0 | 0 | 0 | 255 | 250 | 0 |
| 0 | 64 | 0 | 50 | 23 | 10 | 10 |
| 64 | 64 | 0 | 100 | 32 | 45 | 35 |
| 128 | 64 | 0 | 80 | 62 | 70 | 55 |
| 192 | 64 | 0 | 20 | 102 | 190 | 15 |
| 255 | 64 | 0 | 0 | 180 | 250 | 0 |
| ... | ... | ... | ... | ... | ... | ... |
| 0 | 192 | 255 | 255 | 20 | 0 | 0 |
| 64 | 192 | 255 | 190 | 21 | 0 | 0 |
| 128 | 192 | 255 | 128 | 31 | 0 | 0 |
| 192 | 192 | 255 | 54 | 25 | 0 | 0 |
| 255 | 192 | 255 | 0 | 20 | 0 | 0 |
| 0 | 255 | 255 | 255 | 10 | 0 | 0 |
| 64 | 255 | 255 | 198 | 2 | 0 | 0 |
| 128 | 255 | 255 | 130 | 0 | 0 | 0 |
| 192 | 255 | 255 | 55 | 0 | 0 | 0 |
| 255 | 255 | 255 | 0 | 0 | 0 | 0 |

# FIG. 7

PRINT DATA
GENERATING PROCESS

OBTAIN TRANSPARENTIZED COLOR AND
VALID TARNSPARENTIZING VALUE — S10

OBTAIN IMAGE DATA — S11

SET THE IMAGE DATA IN sRGB FORMAT — S12

OBTAIN sRGB VALUES OF
A MARKED PIXEL — S13

OBTAIN COLOR DIFFERENCE BETWEEN
THE MARKED PIXEL AND
THE TARNSPARENTIZED COLOR — S14

CONVERT THE sRGB VALUES INTO
256-SCALED CMYK VALUES — S15

SET MAXIMUM VALUE 255
TO W SCALE VALUE — S16

TRANSPARENTIZING PROCESS — S17

S18

NO      ALL PIXELS PROCESSED?

YES

RANDOM-DITHERING AND GENERATE
PRINT DATA — S19

END

FIG. 8

TRANSPARENTIZING
PROCESS

S21

COLOR DIFFERENCE
IS SMALLER THAN VALID
TRANSPARENTIZING VALUE?

NO

YES

COLOR DIFFERENCE WITH RESPECT
TO VALID TRANSPARENTIZING VALUE
IS SET TO BE THE OPACITY VALUE

S22

SET THE OPACITY VALUE TO BE 1

S23

MULTIPLY CMYKW VALUES BY
THE OPACITY VALUE

S24

RETURN

FIG. 9

310

311

PRINT SETTING                                                    ⊗

|  | R | G | B |
|---|---|---|---|
| COLOR TO BE TRANSPARENT | 255 | 0 | 0 |

312

0                              100

VALID TRANSPARENTIZING
RANGE                                           ▯ | 100 |          313

PRINT

314

# FIG.10

FIG.11

**FIG.12**

PRINT DATA
GENERATING PROCESS

OBTAIN FIRST TRANSPARENTIZED
COLOR AND FIRST VALID
TARNSPARENTIZING VALUE — S40

OBTAIN SECOND TRANSPARENTIZED
COLOR AND SECOND VALID
TARNSPARENTIZING VALUE — S41

OBTAIN IMAGE DATA — S42

SET THE IMAGE DATA IN sRGB FORMAT — S43

OBTAIN sRGB VALUES OF
A MARKED PIXEL — S44

OBTAIN COLOR DIFFERENCE BETWEEN
THE MARKED PIXEL AND THE FIRST
TARNSPARENTIZED COLOR — S45

OBTAIN COLOR DIFFERENCE BETWEEN
THE MARKED PIXEL AND THE SECOND
TARNSPARENTIZED COLOR — S46

CONVERT THE sRGB VALUES INTO
256-SCALED CMYK VALUES — S47

SET MAXIMUM VALUE 255
TO W SCALE VALUE — S48

TRANSPARENTIZING PROCESS — S49

S50
NO — ALL PIXELS PROCESSED?

YES

RANDOM-DITHERING AND GENERATE
PRINT DATA — S51

END

320
321

**PRINT SETTING**                                    ⊠

| | R | G | B |
|---|---|---|---|
| COLOR TO BE TRANSPARENT | 255 | 0 | 0 |

322

FIRST VALID
TRANSPARENTIZING RANGE    0 ———————————— 100    [ 100 ]

323
324

| | R | G | B |
|---|---|---|---|
| COLOR TO BE TRANSPARENT | 255 | 50 | 50 |

325

SECOND VALID
TRANSPARENTIZING RANGE    0 ———————————— 100    [ 50 ]

326

PRINT

327

# FIG.13

**REFERENCES CITED IN THE DESCRIPTION**

**Patent documents cited in the description**

- JP 2008089462 A
- JP HEI07114241 B
- JP 2002038063 A
- JP 2007282205 A
- JP 2003231300 A
- JP 2000163238 A